# EUROPEAN PATENT APPLICATION

(11) **EP 3 470 665 A1**
(43) Date of publication of application: **17.04.2019**
(21) Application number: 18192798.9
(22) Date of filing: 05.09.2018
(51) Int. Cl.: F02M 63/02, F02M 37/00

(54) **FUEL RECIRCULATION**

(30) Priority: 11.10.2017 US 201715730009
(71) Applicant: Deere & Company, Moline, IL 61265 (US)
(72) Inventor: NEHMER, Daniel, Waterloo, IA 50701 (US)
(74) Representative: Robson, Aidan John

(57) **Abstract**

A method of dissolving water into diesel fuel in a diesel engine (10) includes pumping fuel through a flow path with a pump, directing a first portion of the fuel into a high pressure rail (70), injecting the first portion of the fuel into one or more cylinder heads for combustion, directing a second portion of the fuel into a first conduit (26), and actuating a flow diverter (88) such that, the second portion of the fuel is directed toward a fuel reservoir (12) when the flow diverter (88) is in a first position, and the second portion of the fuel is directed toward the first pump (32) bypassing the fuel reservoir (12) when the flow diverter (88) is in a second position.

## Description

### BACKGROUND

The present disclosure relates to the flow of fuel through diesel engines.

### SUMMARY

In one embodiment, the application provides a diesel engine fuel system having a fuel reservoir, a pump that moves fuel from the fuel reservoir, a first conduit fluidly coupled to the fuel reservoir at a first end and to the pump at a second end, and a high pressure rail assembly that receives fuel from the pump. The high pressure rail assembly supplies fuel into one or more cylinder heads for combustion. A second conduit receives fuel from the rail assembly and is connected to the fuel reservoir to direct fuel received from the rail assembly into the fuel reservoir. A flow diverter is connected to the second conduit, and a third conduit is connected to the flow diverter at a first end and to the first conduit at a second end. The flow diverter connects the second conduit to the fuel reservoir to permit fuel to flow into the fuel reservoir when the flow diverter is in a first position and connects the second conduit and the first conduit to permit fuel to bypass the fuel reservoir when the flow diverter is in a second position.

In another embodiment the application provides a method of dissolving water into diesel fuel in a diesel engine. The method includes pumping fuel through a flow path with a pump, directing a first portion of the fuel into a high pressure rail, injecting the first portion of the fuel into one or more cylinder heads for combustion, directing a second portion of the fuel into a first conduit, and actuating a flow diverter such that, the second portion of the fuel is directed toward a fuel reservoir when the flow diverter is in a first position, and the second portion of the fuel is directed toward the first pump bypassing the fuel reservoir when the flow diverter is in a second position.

In another embodiment the application provides a control system for controlling flow in a fuel system. The control system includes a return conduit that directs fuel into a reservoir, a temperature sensor that senses the temperature of fuel in the fuel system, and a bypass conduit that directs fuel into a pump. The pump is positioned fluidly downstream of the reservoir. The control system further includes a flow diverter fluidly connected to the return conduit and to the bypass conduit, and a controller that receives a temperature signal from the temperature sensor and sends a control signal to the flow diverter to direct fuel into at least one of the return conduit and the bypass conduit based on the temperature signal.

Other aspects of the application will become apparent by consideration of the detailed description and accompanying drawings.

### BRIEF DESCRIPTION OF THE DRAWINGS

Fig. 1 is a schematic view of a diesel fuel system with a recirculation circuit according to some embodiments.
Fig. 2 is a schematic view of a diesel fuel system with a recirculation circuit according to some embodiments.

### DETAILED DESCRIPTION

Before any embodiments of the disclosure are explained in detail, it is to be understood that the disclosure is not limited in its application to the details of construction and the arrangement of components set forth in the following description or illustrated in the following drawings. The disclosure is capable of supporting other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings, and the terms "connected" and "coupled" and variations thereof are not restricted to physical or mechanical connections or couplings. Also, it is to be understood that phraseology and terminology used herein with reference to device or element orientation (such as, for example, terms like "front", "back", "up", "down", "top", "bottom", and the like) are only used to simplify description of the present disclosure, and do not alone indicate or imply that the device or element referred to must have a particular orientation. In addition, terms such as "first", "second", and "third" are used herein and in the appended claims for purposes of description and are not intended to indicate or imply relative importance or significance.

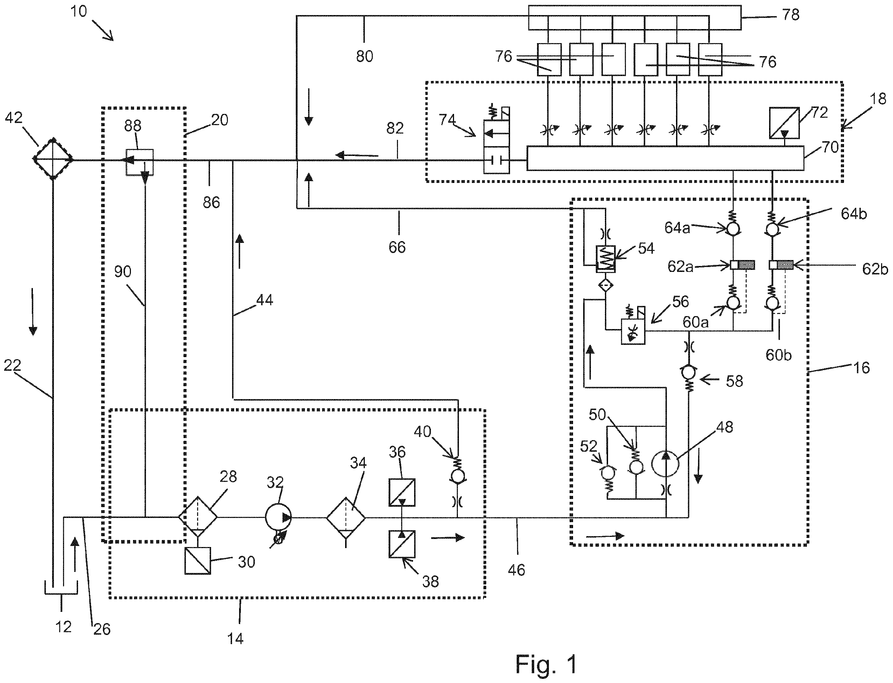

Fig. 1 illustrates a diesel engine fuel system 10 including a fuel reservoir 12, a fuel conditioning section 14, a high pressure pump section 16, a high pressure rail assembly 18, a bypass circuit 20 and a return line 22. The fuel reservoir 12 can be a fuel tank in a diesel engine and has an inlet for receiving unused fuel through the return line 22 and an outlet for delivering fuel to the fuel conditioning section 14 via a first conduit 26.

The illustrated fuel conditioning section 14 includes a primary filter 28 with a water in fuel (WIF) sensor 30, a first pump 32, a secondary filter 34, a pressure sensor 36, a temperature sensor 38 and an air bleed 40. Fuel moves through the fuel conditioning section 14 from left to right in Fig. 1. The primary and secondary filters 28 and 34 can capture flow improvers (such as EVA copolymers), wax crystals, ice crystals as well as other debris and impurities in the fuel. In some embodiments, the primary filter 28 captures relatively large molecules (for example, molecules having a size of 10 microns or more) and the secondary filter 34 captures relatively small molecules (for example, molecules having a size of 2 microns or greater). In some embodiments, the primary filter 28 captures mainly debris and impurities, whereas the secondary filter 34 captures mainly flow improvers, wax crystals and ice crystals.

At higher temperatures, the flow improvers are in solution in the fuel and prevent the formation of wax molecules and the formation of ice is inhibited. The flow improvers can separate from the fuel at low temperatures and the flow improvers typically have a molecule size of about 2-5 microns. Wax molecules can form in the fuel at low temperatures and can have a molecules size of about 2-5 microns. Some water is in solution in the fuel and does not appear to negatively impact performance of diesel engines when the water remains in solution in the fuel. Water can be present in the fuel either in solution, which is sometimes considered to be the humidity value or water in fuel, or emulsified, which means that the fuel is blended with the water in the first pump 32. However, at lower temperatures, the water freezes to form ice which can negatively impact performance of diesel engines. Ice can form from any water in the fuel (either in solution or emulsified) when the temperature is below 0°C and can have a size of about 3-5 microns. At cooler temperatures, the secondary filter 34 can become clogged with flow improvers, wax molecules and ice, thus requiring the secondary filter 34 to be replaced more frequently when diesel engines are operated at cooler temperatures.

The water in fuel sensor 30 notifies the user when the volume of water in fuel is too great. A water tank can be emptied to allow additional water to be removed from the fuel. The pressure sensor 36 notifies the user when the pressure reaches a pre-determined amount to indicate the one or both of the filters 28 and 34 are clogged.

The temperatures sensor 38 initiates cooling of the fuel is the fuel temperature is above a pre-determined valve, such as 80°C. In some embodiments, cooling is achieved by one or more heat exchangers. One such heat exchanger 42 is positioned along the return line 22.

The air bleed 40 permits air to bypass the high pressure pump section 16 and the high pressure rail assembly 18 through air tube 44. In some embodiments, the air bleed 40 is triggered when a filter needs to be replaced or when the system runs out of fuel. After the fuel has passed through the fuel conditioning section 14, the fuel is delivered to the high pressure pump section 16 via a second conduit 46.

The illustrated high pressure pump section 16 includes a second pump 48, a priming valve 50, a relief valve 52, an overflow valve 54, a fuel management unit 56, a zero delivery throttle 58, a first pair of check valve 60a, 60b, a pair of plungers 62a, 62b and a second pair of check valves 64a, 64b. The second pump 48 draws fuel from the second conduit 46 and directs fuel toward the fuel management unit 56. In some embodiments, the second pump 48 pressurizes the fuel to about 120 psi. The priming valve 50 permits additional fuel to flow toward the fuel management unit 56 at lower pressures and the relief valve 52 permits some of the fuel to drain away from the fuel management unit 56 at higher pressures.

The overflow valve 54 permits some of the fuel to bypass the high pressure rail assembly 18 when the pressure and/or volume of the fuel is above a pre-determined value. The overflow valve 54 permits fuel to flow through a third conduit 66 which directs fuel toward the bypass circuit 20. The zero delivery throttle 58 permits some of the fuel to return to the second pump 48 when the pressure and/or volume of the fuel is above a pre-determined value. The first pair of check valves 60a, 60b, the pair of plungers 62a, 62b and the second pair of check valves 64a, 64b pressurize the fuel to a desired pressure. In some embodiments, the desired pressure is around 4300 psi.

The high pressure rail assembly 18 includes a high pressure rail 70, a rail pressure sensor 72 and a pressure relief valve 74. The high pressure rail 70 acts as an accumulator for accumulating high pressure fuel and supplying the high pressure fuel to a plurality of fuel injectors 76. Each of the injectors 76 includes an atomizer with a switch for supplying pre-determined amounts of atomized fuel into a cylinder head 78. Any unburned fuel exits the cylinder head 78 through a fourth conduit 80 toward the bypass circuit 20. Other configurations of high pressure rails, fuel injectors and cylinder heads can be utilized; the illustrated embodiment is included for example only.

The rail pressure sensor 72 senses the pressure of the fuel in the high pressure rail 70 and can communicate with other parts of the diesel engine fuel system 10 to increase or decrease the pressure as needed. The pressure relief valve 74 permits fuel to exit the high pressure rail 70 to flow into a fifth conduit 82 toward the bypass circuit 20.

The bypass circuit 20 receives fuel from a conduit 86 that includes the combined fuel from the conduits 66, 80 and 82 as well as the air from air tube 44. The bypass circuit 20 includes a flow diverter 88 and a bypass conduit 90. The flow diverter 88 can fluidly couple the conduit 86 to the bypass conduit 90 and/or the return line 22.

In some embodiments, the flow diverter 88 is a solenoid valve that is actuated in response to a sensed temperature from one or more sensors, such as the temperature sensor 38. The solenoid valve has a first position in which all the fuel is directed from the conduit 86 into the return line 22 and then into the reservoir 12 and a second position in which all the fuel is directed from the conduit 86 into the bypass conduit 90 and then into the first conduit 26. A solenoid valve permits active control of the fuel flow path based upon one or more sensed temperatures and/or pressures. A control system can include a controller that receives input from various sensors and provides an output to the solenoid valve to thereby open or close the solenoid valve based upon the input from the various sensors.

In some embodiments, the flow diverter 88 is a wax motor which provides passive control of fuel flow. The wax motor also has first and second positions in which all the fuel is directed to the return line 22 and the bypass conduit 90, respectively. The wax motor also includes a plurality of intermediate positions in which fuel is allowed to flow into both the return line 22 and the bypass conduit 90. As the temperature of the fuel increases, the volume of the wax in the wax motor increases, thereby diverting more fuel into the return line 22 which directs fuel through the heat exchanger 42 and into the reservoir 12. As the temperature of the fuel decreases, the volume of the wax in the wax motor decreases, thereby diverting more fuel into the bypass conduit 90 which directs fuel into the fuel conditioning section 14. The proportion of fuel diverted to the return line 22 and the bypass conduit 90 is controlled by the wax motor based upon the temperature of the fuel and thus the volume of the wax in the wax motor.

When fuel in an engine is cold, such as below 20°C, the flow diverter 88 directs the fuel into the bypass conduit 90 to bypass the heat exchanger 42 and the reservoir 12. The bypass circuit 20 can heat up the fuel faster than if the bypass circuit 20 is not utilized. In some embodiments, the pressure relief valve 74 is opened when the fuel is below a pre-determined temperature to direct hot pressurized fuel into the conduit 82 instead of being atomized and depressurized and then directed into the conduit 80.

One of the advantages of heating the fuel more quickly than would be possible without the bypass conduit 90 is that ice is less likely to form in the fuel and thus, ice is less likely to clog the primary filter 28. Another advantage is that warmer fuel prevents wax formation of the fuel, and thus, the wax is less likely to clog the secondary filter 34. Additionally, warmer fuel (for example, above 50°C) will dissolve the flow improvers back into the fuel, and thus, the flow improvers are less likely to clog the secondary filter 34. It is also possible that water, wax and flow improvers that were collected by the primary 28 and/or secondary filters 34 could be dissolved back in to the warmer fuel, thus lengthening the life of the primary and secondary filters 28 and 34. Further, the time between service stops can be increased since the filters 28 and 34 will not need to be cleaned or replaced as frequently.

In some instances, when the water in sensor 30 indicates that a small amount of water is present in a water bowl, the flow diverter (when the flow diverter is a solenoid valve) can be moved to the second position in which all of the fuel is directed into the bypass conduit 90 to heat up the fuel more quickly. The warmer fuel can be used to dissolve some water from the water bowl into the fuel, thereby increasing the time between required draining of water from the water bowl. Instead of draining the water bowl frequently during start up and cool ambient temperatures, it is possible to increase the temperature of the fuel with the bypass circuit 20 to evaporate the water from the water bowl back into the fuel. This can increase the time between required water bowl draining and thus, increase the operation time of the diesel engine between required service stops.

When the water in fuel sensor 30 senses no water in the water bowl, the flow diverter (when the flow diverter is a solenoid valve) can be moved to the first position in which all of the fuel is directed into the return line 22 unless one or more sensors (such as pressure sensor 36 and temperature sensor 38) indicate that the fuel should be directed into the bypass conduit 90. When the water in fuel sensor 30 indicates that there is a high amount of water in the water bowl, the WIF sensor sends a signal to instruct the user to empty the water bowl.

If the diesel engine is kept at idle speed for a pre-determined length of time below a pre-determined ambient temperature, the flow diverter (when the flow diverter is a solenoid valve) can divert fuel into the bypass conduit 90 to inhibit formation of ice, wax and flow improvers on the primary and secondary filters 28 and 34.

In the event that the fuel is not heating up as quickly as desired and the filters are sensed to be clogged, the pressure relief valve 74 can be opened to direct warm fuel into the fifth conduit 82, the conduit 86 and then into the bypass conduit 90. This can direct warm fuel through the primary filter 28 and the secondary filter 34 to more quickly dissolve the ice, wax and fuel improvers back into the fuel to thereby unclog the filters 28 and 34. If one or both of the filters 28 and 34 remain clogged for a pre-determined amount of time when the fuel is above a pre-determined temperature, the user will be notified to clean or change one or both of the filters 28 and 34.

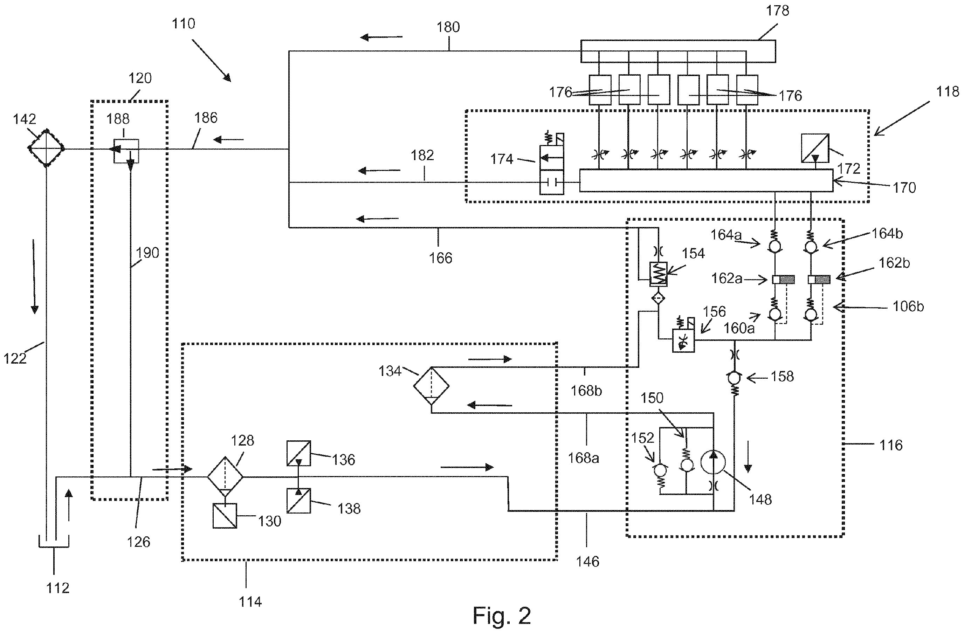

Fig. 2 illustrates a diesel engine fuel system 110 according to some embodiments. Accordingly numbers in the "100" series will be utilized to describe the elements in Fig. 2. Elements in Fig. 2 that correspond to elements in Fig. 1 will note be discussed in detail because reference is made to the description of Fig. 1 for these corresponding elements. Only the differences between Figs. 1 and 2 will be discussed in detail.

The illustrated diesel engine fuel system includes a fuel reservoir 112, a fuel conditioning section 114, a high pressure pump section 116, a high pressure rail assembly 118, a bypass circuit 120 and a return line 122. The fuel reservoir 112 can be a fuel tank in a diesel engine and has an inlet for receiving unused fuel through the return line 122 and an outlet for delivering fuel to the fuel conditioning section 114 via a first conduit 126.

The illustrated fuel conditioning section 114 includes a primary filter 128 with a water in fuel (WIF) sensor 130, a secondary filter 134, a pressure sensor 136 and a temperature sensor 138. Fuel moves through the fuel conditioning section 114 from left to right in Fig. 2. The primary filter 128 can capture flow improvers (such as EVA copolymers), wax crystals, ice crystals as well as other debris and impurities in the fuel. In some embodiments, the primary filter 128 captures relatively large molecules (for example, molecules having a size of 10 microns or more), and the secondary filter 134 captures relatively small molecules (for example, molecules having a size of 2 microns or greater). In some embodiments, the primary filter 128 captures mainly debris and impurities, whereas the secondary filter 134 captures mainly flow improvers, wax crystals and ice crystals.

The illustrated fuel conditioning section 114 positions the primary filter 128 and WIF sensor 130 upstream of the pressure sensor 136 and the temperature sensor 138. Also, the secondary filter 134 is downstream of the primary filter 128 the WIF sensor 130, the pressure sensor 136 and the temperature sensor 138. The fuel conditioning system 114 illustrated in Fig. 2 does not include a pump.

After the fuel has passed through the fuel conditioning section 114, the fuel is delivered to the high pressure pump section 116 via a second conduit 146.

The illustrated high pressure pump section 116 includes a pump 148, a priming valve 150, a relief valve 152, an overflow valve 154, a fuel management unit 156, a zero delivery throttle 158, a first pair of check valve 160a, 160b, a pair of plungers 162a, 162b and a second pair of check valves 164a, 164b. The pump 148 draws fuel from the second conduit 146 and directs fuel toward the fuel management unit 156. In some embodiments, the pump 148 pressurizes the fuel to about 120 psi. The priming valve 150 permits additional fuel to flow toward the fuel management unit 156 at lower pressures and the relief valve 152 permits some of the fuel to drain away from the fuel management unit 156 at higher pressures.

The pump 148 directs fuel along conduit 168a into the secondary filter 134 of the fuel conditioning system 114, and then along conduit 168b into the high pressure pump section 116. The overflow valve 154 permits some of the fuel to bypass the high pressure rail assembly 118 when the pressure and/or volume of the fuel is above a pre-determined value. The overflow valve 154 permits fuel to flow through a third conduit 166 which directs fuel toward the bypass circuit 120. The zero delivery throttle 158 permits some of the fuel to return to the pump 148 when the pressure and/or volume of the fuel is above a pre-determined value. The first pair of check valves 160a, 160b, the pair of plungers 162a, 162b and the second pair of check valves 164a, 164b pressurize the fuel to a desired pressure. In some embodiments, the desired pressure is around 4300 psi.

The high pressure rail assembly 118 includes a high pressure rail 170, a rail pressure sensor 172 and a pressure relief valve 174. The high pressure rail 170 acts as an accumulator for accumulating high pressure fuel and supplying the high pressure fuel to a plurality of fuel injectors 176. Each of the injectors 176 includes an atomizer with a switch for supplying pre-determined amounts of atomized fuel into a cylinder head 178. Any unburned fuel exits the cylinder head 178 through a fourth conduit 180 toward the bypass circuit 120. Other configurations of high pressure rails, fuel injectors and cylinder heads can be utilized; the illustrated embodiment is included for example only.

The rail pressure sensor 172 senses the pressure of the fuel in the high pressure rail 170 and can communicate with other parts of the diesel engine fuel system 110 to increase or decrease the pressure as needed. The pressure relief valve 174 permits fuel to exit the high pressure rail 170 to flow into a fifth conduit 182 toward the bypass circuit 120.

The bypass circuit 120 receives fuel from a conduit 186 that includes the combined fuel from the conduits 166, 180 and 182. The bypass circuit 120 includes a flow diverter 188 and a bypass conduit 190. The flow diverter 188 can fluidly couple the conduit 186 to the bypass conduit 190 and/or the return line 122.

In some embodiments, the flow diverter 188 is a solenoid valve that is actuated in response to a sensed temperature from one or more sensors, such as the temperature sensor 138. The solenoid valve has a first position in which all the fuel is directed from the conduit 186 into the return line 122 and then into the reservoir 112 and a second position in which all the fuel is directed from the conduit 186 into the bypass conduit 190 and then into the first conduit 126. A solenoid valve permits active control of the fuel flow path based upon one or more sensed temperatures and/or pressures. The solenoid valve was described in greater detail with respect to Fig. 1. Reference is made to the description of Fig. 1 for all the functions and benefits of utilizing a solenoid valve as the flow diverter.

In some embodiments, the flow diverter 188 is a wax motor which provides passive control of fuel flow. The wax motor also has first and second positions in which all the fuel is directed to the return line 122 and the bypass conduit 190, respectively. The wax motor also includes a plurality of intermediate positions in which fuel is allowed to flow into both the return line 122 and the bypass conduit 190. As the temperature of the fuel increases, the volume of the wax in the wax motor increases, thereby diverting more fuel into the return line 122 which directs fuel through a heat exchanger 142 and into the reservoir 112. As the temperature of the fuel decreases, the volume of the wax in the wax motor decreases, thereby diverting more fuel into the bypass conduit 190 which directs fuel into the fuel conditioning section 114. The proportion of fuel diverted to the return line 122 and the bypass conduit 190 is controlled by the wax motor based upon the temperature of the fuel and thus the volume of the wax in the wax motor.

When fuel in an engine is cold, such as below 20°C, the flow diverter 188 directs the fuel into the bypass conduit 190 to bypass the heat exchanger 142 and the reservoir 112. The bypass circuit 120 can heat up the fuel faster than if the bypass circuit 120 is not utilized. In some embodiments, the pressure relief valve 174 is opened when the fuel is below a pre-determined temperature to direct hot pressurized fuel into the conduit 182 instead of being atomized and depressurized and then directed into the conduit 180.

Various features and advantages of the invention are set forth in the following claims.

## Claims

1. A diesel engine fuel system comprising:
a fuel reservoir;
a pump configured to move fuel from the fuel reservoir;
a first conduit fluidly coupled to the fuel reservoir at a first end and to the pump at a second end;
a high pressure rail assembly positioned to receive fuel from the second pump, the high pressure rail assembly configured to supply fuel into one or more cylinder heads for combustion;
a second conduit positioned to receive fuel from the rail assembly and fluidly coupled to the fuel reservoir to direct fuel received from the rail assembly into the fuel reservoir;
a flow diverter fluidly coupled to the second conduit; and
a third conduit fluidly coupled to the flow diverter at a first end and to the first conduit at a second end;
wherein the flow diverter is configured to selectively fluidly couple the second conduit to the fuel reservoir to permit fuel to flow into the fuel reservoir when the flow diverter is in a first position and fluidly couple the second conduit and the first conduit to permit fuel to bypass the fuel reservoir when the flow diverter is in a second position.

2. The diesel engine fuel system of claim 1, wherein the flow diverter is a solenoid valve.

3. The diesel engine fuel system of claim 2, further comprising a temperature sensor and a controller, the temperature sensor in communication with the controller to provide a sensed temperature to the controller and the controller in communication with the solenoid valve such that the solenoid valve moves between the first position and the second position in response to a signal from the controller based upon the sensed temperature.

4. The diesel engine fuel system of claim 1, 2 or 3 wherein the flow diverter is a wax motor.

5. The diesel engine fuel system of claim 4, wherein the wax motor is positionable in multiple positions between the first position and the second position such that the wax motor is operable to divert a first portion of the fuel from the rail assembly into the reservoir and is operable to divert a second portion of the fuel from the rail assembly into the first conduit.

6. The diesel engine fuel path of claim 5, wherein the wax motor directs more fuel into the first conduit when the sensed temperature of the fuel is less than a pre-determined temperature, and directs more fuel into the reservoir when the sensed temperature of the fuel is greater than a pre-determined temperature.

7. A method of dissolving water into diesel fuel in a diesel engine, the method comprising:
pumping fuel through a flow path with a pump;
directing a first portion of the fuel into a high pressure rail;
injecting the first portion of the fuel into one or more cylinder heads for combustion;
directing a second portion of the fuel into a first conduit; and
actuating a flow diverter such that, the second portion of the fuel is directed toward a fuel reservoir when the flow diverter is in a first position, and the second portion of the fuel is directed toward the first pump bypassing the fuel reservoir when the flow diverter is in a second position.

8. The method of claim 7, further comprising sensing a temperature of the second portion of fuel.

9. The method of claim 8, further comprising communicating the sensed temperature to a controller and sending a signal from the controller to the flow diverter to thereby move the flow diverter to one of the first position and the second position based upon the sensed temperature.

10. The method of claim 7, 8 or 9, further comprising moving the flow diverter into the first position in response to the sensed temperature being greater than a pre-set temperature.

11. The method of claim 9, further comprising moving the flow diverter into the second position in response to the sensed temperature being less than a pre-set temperature.

12. The method of any of claims 7, 8, 9, 10 or 11 further comprising moving a first amount of the second portion of the fuel toward the first pump and moving a second amount of the second portion of the fuel toward the fuel reservoir when the actuator is in a third position between the first and second positions.

13. The method of claim 12, further comprising providing proportional control between the first position and the second position based upon a temperature of the second portion of the fuel, to move the flow diverter into at least one position between the first position and the second position.

14. A control system for controlling flow in a fuel system, the control system comprising:
a return conduit configured to direct fuel into a reservoir;
a temperature sensor configured to sense the temperature of fuel in the fuel system;
a bypass conduit configured to direct fuel into a pump, the pump positioned fluidly downstream of the reservoir;
a flow diverter fluidly coupled to the return conduit and to the bypass conduit; and
a controller configured to receive a temperature signal from the temperature sensor and to send a control signal to the flow diverter to direct fuel into at least one of the return conduit and the bypass conduit based on the temperature signal.

15. The control system of claim 14, wherein the flow diverter is a solenoid valve.
